# EUROPÄISCHE PATENTSCHRIFT

(11) **EP 3 668 926 B1**
(45) Veröffentlichungstag und Bekanntmachung des Hinweises auf die Patenterteilung: **26.01.2022**
(21) Anmeldenummer: 18749389.5
(22) Anmeldetag: 09.08.2018
(51) Int. Cl.: C08L 67/02

(54) **SPRITZGUSSARTIKEL ENTHALTEND OBERFLÄCHENMODIFIZIERTE SILIKATE**
INJECTION MATERIALS CONTAINING SURFACE MODIFIED SILICATES
ARTICLE MOULÉ PAR INJECTION COMPRENANT DES SILICATES À SURFACE MODIFIÉE

(30) Priorität: 15.08.2017 EP 17186283
(43) Veröffentlichungstag der Anmeldung: 24.06.2020
(73) Patentinhaber: BASF SE, 67056 Ludwigshafen am Rhein (DE)
(72) Erfinder: LEHENMEIER, Maximilian, 67056 Ludwigshafen (DE); BUSSMANN, Martin, 67056 Ludwigshafen (DE); EFFEN, Norbert, 67056 Ludwigshafen (DE); SPRAFKE, Johannes Klaus, 67056 Ludwigshafen (DE); SKUPIN, Gabriel, 67056 Ludwigshafen (DE)
(74) Vertreter: BASF IP Association
(86) Internationale Anmeldenummer: PCT/EP2018/071601
(87) Internationale Veröffentlichungsnummer: WO 2019/034515

(56) Entgegenhaltungen:
- WO-A1-2015/169660
- US-A1- 2007 254 150

## Beschreibung

Die vorliegende Erfindung betrifft einen Spritzgussartikel enthaltend:
i) 27 bis 87 Gew.-%, bezogen auf das Gesamtgewicht der Komponenten i bis iv, eines Polyesters aufgebaut aus aliphatischen Dicarbonsäuren und aliphatischen Diolen;
ii) 3 bis 15 Gew.- %, bezogen auf das Gesamtgewicht der Komponenten i bis iv, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 99 bis 100 mol %, bezogen auf die Komponenten ii-a bis ii-b, 1,3 Propandiol oder 1,4-Butandiol;
   ii-d) 0 bis 1 Gew.- %, bezogen auf die Komponenten ii-a bis ii-c eines Kettenverlängerers und/oder Verzweigers;
iii) 0 bis 35 Gew.-%, bezogen auf das Gesamtgewicht der Komponenten i bis iv, Polymilchsäure;
iv) 10 bis 35 Gew.-%, bezogen auf das Gesamtgewicht der Komponenten i bis iv, mindestens eines oberflächenmodifizierten Kaolins. Aus der WO2015/169660 sind nicht oberflächenmodifizierte Talk-haltige Spritzgussartikel bekannt. Diese Spritzgussartikel können hinsichtlich ihrer Kerbschlagzähigkeit und des E-Moduls für hohe mechanische Beanspruchung nicht voll befriedigen.

Ziel der vorliegenden Erfindung war es somit Spritzgussartikel bereitzustellen, die die obengenannten Nachteile nicht aufweisen. Insbesondere war es das Ziel, einen Spritzgussartikel mit hoher Kerbschlagzähigkeit und einem hohen E-Modul herzustellen.

Überraschenderweise wird das Ziel erreicht durch Spritzgussartikel enthaltend:
i) 27 bis 87 Gew.-%, vorzugsweise 40 bis 75 Gew.-%, bezogen auf das Gesamtgewicht der Komponenten i bis iv, eines Polyesters aufgebaut aus aliphatischen Dicarbonsäuren und aliphatischen Diolen;
ii) 3 bis 15 Gew.- %, vorzugsweise 5 bis 10 Gew.-%, bezogen auf das Gesamtgewicht der Komponenten i bis iv, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 98 bis 100 mol %, bezogen auf die Komponenten ii-a bis ii-b, 1,3-Propandiol oder 1,4-Butandiol;
   ii-d) 0 bis 1 Gew.- %, bezogen auf die Komponenten ii-a bis ii-c eines Kettenverlängerers und/oder Verzweigers;
iii) 0 bis 35 Gew.-%, vorzugsweise 0 bis 25 Gew.-%, bezogen auf das Gesamtgewicht der Komponenten i bis iv, Polymilchsäure;
iv) 10 bis 35 Gew.-%, vorzugsweise 15 bis 30 Gew.-%, bezogen auf das Gesamtgewicht der Komponenten i bis iv, mindestens eines oberfächenmodifizierten Kaolins.

Insbesondere bevorzugt sind Spritzgussartikel enthaltend:
i) 27 bis 85 Gew.-%, vorzugsweise 30 bis 65 Gew.-%, bezogen auf das Gesamtgewicht der Komponenten i bis iv, eines biologisch abbaubaren Polyesters enthaltend:
   i-a) 90 bis 100 mol %, bezogen auf die Komponenten i-a bis i-b, Bernsteinsäure;
   i-b) 0 bis 10 mol %, bezogen auf die Komponenten i-a bis i-b, einer oder mehrerer C₆-C₂₀ Dicarbonsäuren;
   i-c) 99 bis 100 mol %, bezogen auf die Komponenten i-a bis i-b, 1,3-Propandiol oder 1,4-Butandiol;
   i-d) 0 bis 1 Gew.- %, bezogen auf die Komponenten i-a bis i-c eines Kettenverlängerers und/oder Verzweigers;
ii) 3 bis 15 Gew.- %, vorzugsweise 5 bis 10 Gew.-%, bezogen auf das Gesamtgewicht der Komponenten i bis iv, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 99 bis 100 mol %, bezogen auf die Komponenten ii-a bis ii-b, 1,3-Propandiol oder 1,4-Butandiol;
   ii-d) 0 bis 1 Gew.- %, bezogen auf die Komponenten ii-a bis ii-c eines Kettenverlängerers und/oder Verzweigers;
iii) 0 bis 35 Gew.-%, vorzugsweise 10 bis 30 Gew.-%, bezogen auf das Gesamtgewicht der Komponenten i bis iv, Polymilchsäure;
iv) 10 bis 35 Gew.-%, vorzugsweise 18 bis 30 Gew.-%, bezogen auf das Gesamtgewicht der Komponenten i bis iv, mindestens eines oberfächenmodifizierten Kaolins.

Die erfindungsgemäßen Spritzgussartikel weisen trotz des niedrigen Polymilchsäuregehalts oder auch trotz des völligen Verzichts von Polymilchsäure ein erstaunlich hohes E-Modul auf; beziehungsweise trotz des Polymilchsäuregehalts eine gute Kerbschlagzähigkeit auf.

Im Folgenden wird die Erfindung näher beschrieben.

Unter Komponente i werden Polyester aufgebaut aus aliphatischen Dicarbonsäuren und aliphatischen Diolen verstanden.

Als Dicarbonsäuren sind aliphatische C₂-C₃₀-Disäuren oder Mischungen davon oder aromatische C₆ -C₁₄-Disäuren oder Mischungen davon, geeignet. Die Dicarbonsäuren machen in der Regel mehr als 50, vorzugsweise mehr als 70 mol% und insbesondere bevorzugt mehr als 99 mol% der Säure-Wiederholungseinheiten aus.

Unter aliphatischen C₂-C₃₀-Dicarbonsäuren sind beispielhaft zu nennen: Oxalsäure, Malonsäure, Bernsteinsäure, Glutarsäure, 2-Methylglutarsäure, 3-Methylglutarsäure, α-KetogIutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt werden Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen einfach zugänglich sind.

Unter aromatischen C₆ -C₁₄-Dicarbonsäuren sind in der Regel Naphthalin-1,6-dicarbonsäure, Naphthalin-2,5-dicarbonsäure, Phthalsäure, Isophthalsäure und insbesondere bevorzugt Terephthalsäure oder 2,5-Furandicarbonsäure, die ebenfalls aus nachwachsenden Rohstoffen zugänglich ist, zu verstehen.

Unter esterbildende Derivate der aliphatischen oder aromatischen Dicarbonsäuren sind ihre C₁-C₆-Alkylester zu verstehen, wobei die Methyl- und Ethylester der Dicarbonsäuren besonders bevorzugt sind.

Als Diole kommen aliphatische C₂-C₁₈-Diole wie Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol und 2,2,4-Trimethyl-1,6-hexandiol in Frage, wobei Ethylenglykol, 1,3-Propandiol, 1,4-Butandiol und 2,2-Dimethyl- 1,3-propandiol (Neopentylglykol) bevorzugt sind. Letztere haben zudem den Vorteil, dass sie als nachwachsender Rohstoff zugänglich sind. Es können auch Mischungen unterschiedlicher Alkandiole verwendet werden.

Als Diole kommen auch cycloaliphatische C₆-C₁₈-Diole wie 1,4-Cyclohexandimethanol (cis/trans), 1,4-Di(hydroxymethyl)cyclohexan oder 2,5-Tetrahydrofurandimethanol in Frage, wobei 1,4-Cyclohexandimethanol bevorzugt ist.

Unter aliphatischen Polyestern i-A werden Polyester aus aliphatischen Diolen und aliphatischen Dicarbonsäuren wie Polybutylensuccinat (PBS), Polybutylenadipat (PBA), Polybutylensuccinatcoadipat (PBSA), Polybutylensuccinat-cosebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GSPIa vermarktet. Neuere Entwicklungen sind in der WO 2010/034711 beschrieben.

Bevorzugt sind aliphatische Polyester i die folgenden Komponenten enthalten:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren und insbesondere Adipinsäure, Azelainsäure, Sebazinsäure oder Brassylsäure;
i-c) 99 bis 100 mol %, bezogen auf die Komponenten i-a bis i-b, 1,3 Propandiol oder 1,4-Butandiol;
i-d) 0 bis 1 Gew.- %, bezogen auf die Komponenten i-a bis i-c eines Kettenverlängerers und/oder Verzweigers.

Bevorzugte aliphatische Polyester sind Polybutylensuccinat-cosebacat (PBSSe), Polybutylensuccinat-coadipat (PBSA) und insbesondere bevorzugt Polybutylensuccinat (PBS).

In der Regel enthalten die Polyester i-a bis i-d (A1) 0 bis 2 Gew-%, vorzugsweise 0,05 bis 1,0 Gew.-% und insbesondere bevorzugt 0,1 bis 0,3 Gew.-%, bezogen auf das Gesamtgewicht des Polyesters A1, eines Verzweigers und/oder 0,1 bis 1,0 Gew.- %, bezogen auf das Gesamtgewicht des Polyesters A1, eines Kettenverlängerers. Der Verzweiger ist bevorzugt mindestens ein trifunktioneller Alkohol oder eine mindestens trifunktionellen Carbonsäure. Als Kettenverlängerer kommen insbesondere difunktionelle Isocyanate, Isocyanurate, Oxazoline, Carbonsäureanhydrid oder Epoxide in Frage.

Besonders bevorzugte Verzweiger haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponente lassen sich biologisch abbaubare Polyester mit einer strukturellen Viskosität aufbauen. Die biologisch abbaubaren Polyester lassen sich leichter verarbeiten.

Unter einem Diisocyanat als Kettenverlängerer werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate sind Isophorondiisocyanat und insbesondere 1,6-Hexamethylendiisocyanat.

Unter polyfunktionellen Epoxiden als Kettenverlängerer wird insbesondere ein Epoxidgruppenhaltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mwder Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist beispielsweise Joncryl^{®} ADR 4368.

In der Regel ist es sinnvoll die verzweigenden (mindestens trifunktionellen) Verbindungen zu einem früheren Zeitpunkt der Polymerisation zuzugeben.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl gemäß ISO 1628-5 (gemessen in 0,05 g/ml Lösung Phenol/o-Dichlorbenzol (1:1)) liegt zwischen 30 und 450, vorzugsweise von 100 bis 400 mL/g (gemessen in o-Dichlorbenzol/Phenol (Gewichtsverhältnis 50/50). Der Schmelzpunkt liegt im Bereich von 85 bis 130, bevorzugt im Bereich von 95 bis 120°C.

Unter aliphatisch-aromatischen Polyestern ii sind lineare, kettenverlängerte und gegebenenfalls verzweigte und kettenverlängerte Polyester zu verstehen, wie beispielsweise in der WO 96/15173 bis 15176 oder in der WO 98/12242, auf die ausdrücklich Bezug genommen wird, beschrieben. Mischungen unterschiedlicher teilaromatischer Polyester kommen ebenso in Betracht. Interessante jüngere Entwicklungen basieren auf nachwachsenden Rohstoffen (siehe WO2010/034689). Insbesondere sind unter Polyestern ii Produkte wie ecoflex^{®} (BASF SE) zu verstehen.

Zu den bevorzugten Polyestern ii zählen Polyester, die als wesentliche Komponenten enthalten:
ii-a) 30 bis 70 mol-%, vorzugsweise 40 bis 60 und insbesondere bevorzugt 50 bis 60 mol-%, bezogen auf die Komponenten ii-a) bis ii-b), einer aliphatischen Dicarbonsäure oder Mischungen davon, vorzugsweise wie im Folgenenden ausgeführt: Adipinsäure, Azelainsäure, Sebacinsäure und Brassylsäure,
ii-b) 30 bis 70 mol-%, vorzugsweise 40 bis 60 und insbesondere bevorzugt 40 bis 50 mol-%, bezogen auf die Komponenten ii-a) und ii-b), einer aromatischen Dicarbonsäure oder Mischungen davon, vorzugsweise wie im Folgenenden ausgeführt: Terephthalsäure,
ii-c) 99 bis 100 mol-%, bezogen auf die Komponenten ii-a) bis ii-b), 1,4-Butandiol und 1,3-Propandiol; und
ii-d) 0 bis 1 Gew.-%, vorzugsweise 0,1 bis 0,2 Gew.-%, bezogen auf die Komponenten ii-a) bis ii-c), eines Kettenverlängerers, insbesondere eines di- oder polyfunktionellen Isocyanats, vorzugsweise Hexamethylendiisocyanats und gegebenenfalls eines Verzweigers vorzugsweise: Trimethylolpropan, Pentaerythrit und insbesondere Glycerin.

Als aliphatische Disäuren und die entsprechenden Derivate ii-a kommen im Allgemeinen solche mit 6 bis 20 Kohlenstoffatomen, vorzugsweise 6 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: 2-Methylglutarsäure, 3-Methylglutarsäure, α-KetogIutarsäure, Adipinsäure, Pimelinsäure, Azelainsäure, Sebacinsäure, Brassylsäure, Suberinsäure (Korksäure), und Itaconsäure. Dabei können die Dicarbonsäuren oder deren esterbildenden Derivate, einzeln oder als Gemisch aus zwei oder mehr davon eingesetzt werden.

Bevorzugt werden Adipinsäure, Azelainsäure, Sebacinsäure, Brassylsäure oder deren jeweilige esterbildenden Derivate oder Mischungen davon eingesetzt. Besonders bevorzugt werden Adipinsäure oder Sebacinsäure oder deren jeweilige esterbildenden Derivate oder Mischungen davon eingesetzt.

Insbesondere bevorzugt sind die folgenden aliphatisch-aromatischen Polyester: Polybutylenadipatterephthalat (PBAT), Polybutylensebacatterephthalat (PBSeT).

Die aromatischen Dicarbonsäuren oder deren esterbildende Derivate ii-b können einzeln oder als Gemisch aus zwei oder mehr davon eingesetzt werden. Besonders bevorzugt wird Terephthalsäure oder deren esterbildende Derivate wie Dimethylterephthalat, verwendet.

Die Diole ii-c - 1,4-Butandiol und 1,3- Propandiol - sind als nachwachsender Rohstoff zugänglich. Es können auch Mischungen der genannten Diole verwendet werden.

In der Regel werden 0 bis 1 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0,05 bis 1 Gew-%, vorzugsweise 0,1 bis 1,0 Gew.- %, bezogen auf das Gesamtgewicht des Polyesters, eines Kettenverlängerers (ii-d) eingesetzt. Bevorzugt sind die gleichen Verzweiger und Kettenverlängerer (ii-d) wie die zuvor detailliert beschriebenen Verzweiger und Kettenverlängerer (i-d).

Die Polyester ii weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Der MVR (Schmelzvolumenrate) nach EN ISO 1133-1 DE (190°C, 2,16 kg Gewicht) liegt im Allgemeinen bei 5 bis 50, bevorzugt bei 7,5 bis 25 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Als steife Komponente iii wird Polymilchsäure (PLA) eingesetzt.

Polymilchsäure mit dem folgenden Eigenschaftsprofil wird bevorzugt eingesetzt:
- einer Schmelzvolumenrate (MVR bei 190° C und 2.16 kg nach ISO 1133-1 DE insbesondere von 30 bis 40 cm³/10 Minuten)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise NatureWorks^{®} 6201 D, 6202 D, 6251 D, 3051 D und insbesondere 3251 D sowie kristallinen Polymilchsäuretypen der Fa. NatureWorks.

Die Polymilchsäure iii wird wie eingangs erwähnt in einem Gewichtsprozent-Anteil, bezogen auf die Komponenten i und iv, von 0 bis 35%, vorzugsweise von 0 bis 10% bei den aromatischen Polyestern i-B eingesetzt. Bei den aliphatischen Polyestern i-A wird die Polymilchsäure in einem Gewichtsprozent-Anteil, bezogen auf die Komponenten i und iv, von 0 bis 35%, vorzugsweise von 10 bis 30% eingesetzt. Hierbei bildet vorzugsweise die Polymilchsäure iii die disperse Phase und der Polyester i die kontinuierliche oder ist Teil einer cokontinuierlichen Phase. Polymermischungen mit Polyester i in der kontinuierlichen Phase oder als Teil einer cokontinuierlichen Phase weisen eine höhere Wärmeformbeständigkeit auf als Polymermischungen, in denen Polymilchsäure iii die kontinuierliche Phase bildet.

Wie eingangs erwähnt, weisen die erfindungsgemäßen Spritzgussartikel trotz des niedrigen Polymilchsäuregehalts oder auch trotz des völligen Verzichts von Polymilchsäure ein erstaunlich hohes E-Modul auf.

In der Regel werden 10 bis 35 Gew.-%, insbesondere 20 bis 30 Gew.-% bezogen auf das Gesamtgewicht der Komponenten i bis iv, mindestens eines oberflächenmodifizierten Kaolins eingesetzt.

Die Oberfächenmodifikation des Kaolins spielt eine entscheidende Rolle. Zur Oberflächenmodifizierung werden vorzugsweise Silane eingesetzt. Insbesondere bevorzugt ist mit Silanen modifiziertes Kaolin und hier besonders bevorzugt mit Hydroxysilan-, Aminosilan-, Epoxysilan, Alkylsilan, Mercaptosilan, Ureidosilan, Halogensilan, oder insbesondere bevorzugt mit Methacrylsilan- oder Vinylsilan-modifizierte Kaoline. Oberflächenmodifziertes Kaolin wird beispielsweise von den Firmen Imery, BASF, Amberger Kaolinwerke und insbesondere der Hoffmann-Gruppe vertrieben. In den vorliegenden Spritzgussartikeln haben silanmodifizierte Kaoline der BASF, die unter dem Markennamen Translink^{®} vertriebenen werden und insbesondere silanmodifizierte Kaoline der Hoffmann Gruppe, die unter dem Namen aktifit vertriebenen werden, hervorragende mechanische Eigenschaften geliefert. Vorallem bei den aliphatischen Polyestern i-A sind Aminosilan-modifizierte Kaoline bevorzugt und Methacrylsilan- oder Vinylsilan-modifizierte Kaoline besonders bevorzugt, da diese Füllstoffe Spritzgussartikel mit hohem E-Modul und gleichzeitig hoher Kerbschlagzähigkeit liefern. Neben der Oberflächenmodifikation spielt die Korngröße und das Aspektverhältnis (L/D- oder Querschnittverhältnis) eine große Rolle.

Eine geringe Korngröße führt in der Regel zu hohen Kerbschlagzähigkeiten, jedoch zu einem geringeren E-Modul. Bevorzugt eingesetzt wird ein feines Silikat mit einem Anteil von 50% Partikeln (Korngröße D₅₀ gemessen nach ISO 13320-1) von unter 5 µm, vorzugsweise unter 2 µm. Durch Sieben kann der Anteil an Teilchen unter 16 µm vorzugsweise unter 10 µm auf 97 % gesteigert werden.

As vorteilhaft hat sich ein Aspektverhältnis von 1 bis 15 und vorzugsweise 2 bis 10 und insbesondere bevorzugt von 2 bis 6 erwiesen. Das mittlere Aspektverhältnis kann mittels Leitfähigkeitsmessung wie in der EP 528078 B1 beschrieben ermittelt werden.

Kaolin ist ein Naturprodukt und weist neben dem Hauptbestandteil Kaolinit - einem hydratisierten Aluminiumsilikat - andere Tonminerale und unzersetzte Feldspatteilchen auf.

Eine bevorzugte Kaolinquelle ist die Neuburger Kieselerde, ein Gemisch aus korpuskulärer Kieselsäure und lamellarem Kaolinit. Die Kieselsäure weist hier eine runde Kornform aus ca. 200 nm großen aggregierten Primärteilchen auf.

Bevorzugt eingesetzt ist feines Kaolin mit einem kugeläquivalentem statisch gemitteltem Partikeldurchmesser von 0,3 bis 1,5 µm; und insbesondere bevorzugt von 0,3 bis 1,0 µm und einem

Anteil von 50% Partikeln unter 2 µm. Durch Sieben kann der Anteil an Teilchen unter 10 µm auf 97 % gesteigert werden.

Der Ölbedarf als Maß der relativen Oberfläche beträgt 23 g/100 g für einen groben Kaolin, 45 g/100 g für einen feinen Kaolin und 55 g/100 g für einen kalzinierten Kaolin.

Kalziniertes Kaolin ist wegen der erhöhten spezifischen Oberfläche besonders bevorzugt. Durch Kalzination wird das Kristallwasser des Kaolinanteils ausgetrieben. Bei der Neuburger Kieselerde bleibt der kryptokristalline Kieselsäureanteil bei der Kalzination inert.

Weiterhin können die erfindungsgemäßen Spritzgussartikel 0 bis 15 Gew.-%, bezogen auf die Polymermischung i bis iv, andere mineralische Füllstoffe ausgewählt aus der Gruppe bestehend aus: Kreide, Graphit, Gips, Leitruß, Eisenoxid, Calciumchlorid, Natriumcarbonat, Titandioxid, und Mineralfasern enthalten. Auch Füllstoffe aus nachwachsenden Rohstoffen wie Stärke, nicht thermoplastifizierte und insbeseondere plastifizierte Stärke, Cellulose, Chitin oder Chitosan können in 0 bis 10 Gew.-%, bezogen auf die Polymermischung i bis iv, in den erfindungsgemäßen Spritzgussartikeln enthalten sein.

Weiterhin kann der erfindungsgemäße Compound der Komponenten i bis iv weitere dem Fachmann bekannte, Additive enthalten. Beispielsweise die in der Kunststofftechnik üblichen Zusatzstoffe wie Stabilisatoren; Nukleierungsmittel wie die bereits obengenannten mineralischen Füllstoffe iv oder auch kristalline Polymilchsäure; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe. Die Additive werden in Konzentrationen von 0 bis 2 Gew.-%, insbesondere 0,1 bis 2 Gew.-% bezogen auf den erfindungsgemäßen Compound i bis iv eingesetzt. Weichmacher können in 0,1 bis 10 Gew.-% in dem erfindungsgemäßen Compound i bis iv enthalten sein.

Um die Spritzgußartikel mit besonders hohen Kerbschlagzähigkeiten zu erhalten, kann neben dem erfindungsgemäßen oberflächenmodifizierten Kaolin entweder ein thermoplastisches Polyurethan (im Folgenden auch TPU genannt) oder ein Thermoplastischer Copolyester (im Folgenden auch TPEE genannt) zugesetzt werden.

Thermoplastische Polyurethane sind hinlänglich bekannt. Die Herstellung erfolgt durch Umsetzung von (a) Isocyanaten (Hartphase) mit (b) gegenüber Isocyanaten reaktiven Verbindungen / Polyol mit einem zahlenmittleren Molekulargewicht von 0,5 × 10³ g /mol bis 5 × 10³ g /mol (Weichphase) und gegebenenfalls (c) Kettenverlängerungsmitteln mit einem Molekulargewicht von 0,05 × 10³ g /mol bis 0,499 × 10³ g /mol gegebenenfalls in Gegenwart von (d) Katalysatoren und/oder (e) üblichen Hilfsstoffen und/oder Zusatzstoffen.

Die gegenüber Isocyanat reaktive Verbindung (b) hat im statistischen Mittel mindestens 1,8 und höchstens 3,0 zerewitinoffaktive Wasserstoffatome, diese Anzahl wird auch als Funktionalität der gegenüber Isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Beispiele für die erfindungsgemäßen Spritzgussartikel besonders bevorzugten TPUs sind die unter dem Markennamen Elastollan^{®} der Fa. BASF Polyurethane GmbH wie beispielsweise: 685A, S80A, SP 806, 1085A, 785A, 595A, 1598 A, 1295 A, N65A oder C85A.

Beispiele für die erfindungsgemäßen Spritzgussartikel besonders bevorzugten TPEEs sind die unter den Markennamen Hytrel^{®}, Arnitel^{®}, Riteflex^{®}, Pebax^{®} oder Pelprene^{®} vertriebenen Produkte.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO2-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO2-Freisetzung der Probe (nach Abzug der CO2-Freisetzung durch den Kompost ohne Probe) zur maximalen CO2-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Beim Spritzgießen, das auch als Spritzguss oder Spritzgussverfahren bezeichnet wird handelt es sich um ein Formgebungsverfahren, das in der Kunststoffverarbeitung sehr häufig verwendet wird. Im Spritzguss lassen sich äußerst wirtschaftlich direkt verwendbare Formteile in großer Stückzahl herstellen. Das Verfahren funktioniert vereinfacht wie folgt: In einer Spritzgießmaschine, die aus einem beheizbaren Zylinder, in der sich Schneckenwelle dreht, besteht, wird der jeweilige thermoplastische Werkstoff ("Formmasse"), geschmolzen und in eine Form aus Metall ("Werkzeug") eingespritzt. Der Hohlraum des Werkzeugs bestimmt die Form und die Oberflächenstruktur des fertigen Teils. Es sind heute Teile von deutlich unter einem Gramm bis in den zweistelligen Kilogramm-Bereich herstellbar.

Durch Spritzgießen lassen sich Gebrauchsgegenstände mit hoher Genauigkeit wirtschaftlich und in kurzer Zeit produzieren. Die Beschaffenheit der Oberfläche des jeweiligen Bauteils kann dabei von den Konstrukteuren nahezu frei gewählt werden. Von glatten Oberflächen für optische Anwendungen, über Narbungen für berührungsfreundliche Bereiche, bis hin zu Mustern oder Gravuren lassen sich eine Vielfalt von Oberflächenstrukturen darstellen.

Das Spritzgussverfahren eignet sich aus wirtschaftlichen Gründen insbesondere für die Produktion größerer Stückzahlen, wie Verpackungsartikel.

Artikel wie Pralinenschachteleinlagen, Spielekartoneinsätze, Klappblister für alle möglichen Kleinartikel an Lochrasterwänden im Einzelhandel, Joghurt- oder Margarinebecher sind weit verbreitet. Ein bevorzugter Artikel sind Deckel für Kaffeebecher oder andere Becher für Heissgetränke, sowie Gebinde zur Abfüllung von heißen Lebensmitteln.

Ein besonders bevorzugter Spritzgussartikel ist die Kaffeekapsel. Unter Kaffeekapsel wird ein Gebinde von 1 ml bis 80 ml Füllvolumen, vorzugsweise 3 bis 50 ml, verstanden. Dieses Gebinde wird mit einem pulverförmigen Lebensmittel, insbesondere Kaffeepulver oder einer Mischung aus pulverförmigen Lebensmitteln befüllt. Unter Lebensmittel wird neben Kaffee, Tee, Milch, Kakao und Suppenextrakte verstanden. Die Form des Gebindes kann rotationssymmetrisch, rotationssymmetrisch, kegelförmig, kugelförmig, als auch eckig sein, vorzugswiese jedoch rotationssymmetrisch und hauptsächlich zylindrisch sein. Dieses Gebinde dient zum einen zur Lagerung des/der Lebensmittel sowie zum Zubereiten eines wässrigen Heißgetränks welches durch das Durchströmen von heißem Wasser (zwischen 60 und 100° C) in einem anschließenden Schritt hergestellt wird. Das durchströmende Wasser löst beim Durchströmen des Gebindes Geschmacks- und Bitterstoffe und bildet so das Heißgetränk.

Dieses Gebinde soll durch Spritzguss gefertigt werden. Die hierzu verwendete Wanddicke der Flachfolie aus der das/die Gebinde hergestellt werden hat eine Dicke von 100 bis 1000 µm, vorzugsweise 250 bis 800 µm, und insbesondere von 155 bis 550 µm. Der Artikel kann aus einer und vorzugsweise aus mehreren Schichten bestehen. Mindestens eine Schicht enthält den eingangs beschriebenen Compound der Komponenten i) bis iv). Eine weitere Schicht des fertig geformten Gebindes bildet vorzugsweise eine Barriere-bildende Schicht. Der Mehrschichtaufbau kann durch Mehrschichtextrusion bei der Flachfolienherstellung hergestellt werden, sowie auch nach der Flachfolienherstellung als Schicht appliziert werden, durch Extrusion, Drucken, Aufsprühen oder Besputtern, prinzipiell mit dem Auftragen einer Dispersion, eines Lackes oder eines weiteren Polymer-basierten oder Polymer-beinhaltenden Systems oder dem Aufbringen einer metallischen- oder oxyd-haltigen Schicht, vorzugsweise jedoch durch eine polymerbasierte oder metallisierte Schicht. Als metallisierte Schicht kommt beispielsweise Aluminium in Frage, als polymerbasierte Schicht eignen sich Schichten enthaltend Polyglykolsäure (PGA), Polyhydroxyalkanoate (PHA) wie z.B. Poly-3-hydroxybutyrat (PHB), Poly-3-hydroxybutyrat-co-3-hydroxyvalerat (PHB(V)), Poly-3-hydroxybutyrat-co-3-hydroxyhexanoat (PHB(H)) oder Poly-3-hydroxybutyrat-co-4-hydroxyvalerat; Polyvinylalkohol (PVOH), Polyvinylidenchlorid (PVDC) oder Ethylenvinylalkohohol (EVOH). Diese Barriereschicht ist gekennzeichnet durch eine Sauerstoff-transmissionsrate (oxygen transmission rate (OTR)) gemessen an dem gesamten Folienverbund nach der Gebindeherstellung nach ASTM D1434 von 0 bis 1000 g/m²/d, sowie einer Wasserdampftransmissionsrate (water vapor transition rate) nach ASTM F1249 von 0 bis 1000 g/m²/d, sowie vorzugsweise einer gleichzeitigen Aromabarriere.

Die gute Sauerstoffbarriere bzw. Aromabarriere lässt sich auch mittels einer Umverpackung für eine oder mehrere Kaffeekapseln erzielen. Geeignete Umverpackungen können mit einem Barrierefilm beschichtete Kunststofffolien oder Papierfolien sein.

Für das Spritzgussverfahren eignen sich insbesondere Compounds der Komponenten i bis iv mit einem MVR (190°C, 2,16 kg) nach ISO 1133-1 vom 01.03.2012 von 8 bis 40 cm³/10 min, insbesondere bevorzugt 9 bis 30 cm³/10 min.

Anwendungstechnische Messungen:
Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul wurde mittels eines Zugversuchs an Zugstäben mit einer Dicke von etwa 420 µm gemäß ISO 527-3: 2003 bestimmt.

Die Charpy Schlagzähigkeit wurde gemäß DIN EN 179-1/1eU:2000+Amd .A (gemessen bei 23°C, 50% rel. F.) bestimmt. Der Probekörper (80mm x 10 mm x4 mm), gelagert nahe an seinen Enden als waagerechter Balken, wird durch einen einzelnen Schlag eines Pendels beansprucht, wobei die Aufschlaglinie in der Mitte zwischen den beiden Probekörper-Widerlagern liegt und (der Probekörper) mit einer hohen, nominell konstanten Geschwindigkeit (2,9 oder 3,8 m/s) gebogen wird.

Die Wärmeformbeständigkeit HDT-B wurde gemäß DIN EN ISO 75-2:2004-9 bestimmt. Ein Standardprobekörper wird einer Dreipunktbiegung unter konstanter Last ausgesetzt, um eine Biegespannung (HDT/B 0.45 MPa) zu erzeugen, die in dem betreffenden Teil dieser Internationalen Norm angegeben wird. Die Temperatur wird mit gleichförmiger Geschwindigkeit (120 K/h) erhöht, und der Temperaturwert, bei dem eine festgelegte Standarddurchbiegung, die der festgelegten Biegedehnungserhöhung (0.2%) entspricht, erreicht wird, wird gemessen.

### Ausgangsstoffe

Polyester i:
   i-1 Polybutylensuccinat: GS-Pla^{®} FZ71-PD der Firma Mitsubishi Chemical Corporation (MVR bei 22 cm³/10 min (190°C, 2,16 kg))
Polyester ii:
   ii-1 Polybutylenadipat-coterephthalat: ecoflex^{®} FS A1300 der Firma BASF SE (MVR bei 8,5 cm³ /10 min (190°C, 2,16 kg)
Komponente iii:
   iii-1 Polymilchsäure (PLA) Ingeo^{®} 3251 D der Firma NatureWorks (MVR bei 35 cm³/10 min (190°C, 2,16 kg))
Komponente iv:
   iv-1 Santintone 5HB; nicht oberflächenmodifiziertes Kaolin der Fa. BASF Corporation
   iv-2 Tremin 283 600 MST, Amberger Kaolinwerke, methacrylsilanmodifiziertes Wollastonit
   iv-3 Translink 555 der Fa. BASF Corporation, aminosilanmodifizietes Kaolin mit einem mittleren Teilchendurchmesser von 0,8 µm
   iv-4 Aktifit AM der Fa. Hoffmann Gruppe, aminosilanmodifizietes Kaolin
   iv-5 Aktifit VM der Fa. Hoffmann Gruppe, vinylsilanmodifiziertes Kaolin

### 1. Compoundierung

Die in Tabelle 1 aufgeführten Compounds wurden auf einem Extruder des Typs Coperion MC 40 gefertigt. Die Temperaturen am Austritt wurden auf 250°C eingestellt. Anschließend wurde das Extrudat unter Wasser granuliert. Im Anschluss an die Granulatherstellung wurde das Granulat bei 60°C getrocknet.

### 2. Herstellung der Artikel (allgemeinen Vorschrift AV)

Das compoundierte Material wird auf einer Spritzgießmaschine vom Typ Ferromatik Millacron K65 mit einer 30,00 mm Schnecke durchgeführt. Das Spritzgießwerkzeug war ein Einfach- oder Mehrfachkavitätenwerkzeug mit offenem Heißkanal. Gefertigt wurde mittels der CAMPUS Werkzeuge der Normen ISO 179/1 eU und ISO 527-1/-2. Die Werkzeugtemperatur betrug 30°C, Die Werkzeuge wurden mit einem Druck von 560 bar und einem Nachdruck von 800 bar gefüllt.

**Tabelle 1**

| Beispiel | **V1** | **V2** | **3** | **4** | **5** | **6** | **7** | **8** |
|---|---|---|---|---|---|---|---|---|
| Compounds (Angaben in Gewichtsprozent) | | | | | | | | |
| i-1 | 76 | 80 | 76 | 72 | 68 | 65 | 62,22 | 62,22 |
| ii-1 | 4 | | 4 | 8 | 12 | 15 | 7,78 | 7,78 |
| iv-1 | 20 | | | | | | | |
| iv-2 | | | | | | 20 | | |
| iv-3 | | 20 | 20 | 20 | 20 | | | |
| iv-4 | | | | | | | 30 | |
| iv-5 | | | | | | | | 30 |
| | | | | | | | | |
| Dicke des Iso Stabs (mm) | 3,92 | 3,92 | 3,92 | 3,93 | 3,94 | 3,98 | 3,95 | 3,95 |
| E-Modulus (MPa) | 1098 | 1229 | 1058 | 938 | 904 | 682 | 1108 | 1079 |
| Charpy (kJ/m²) | 6,18 | 6,9 | 7,16 | 7,81 | 9,13 | 7,55 | 8,17 | 8,51 |
| HDT/B (° C) | 89,8 | 93,7 | 89,8 | 90,0 | 88,3 | 84,5 | 89,7 | 90,0 |

**Tabelle 2: Polymilchsäurehaltige Spritzgussartikel**

| Beispiel | **9** | **10** | **11** | **12** | **13** | **14** |
|---|---|---|---|---|---|---|
| Compounds (Angaben in Gewichtsprozent) | | | | | | |
| i-1 | 55 | 48.89 | 42,78 | 55 | 48.89 | 42,78 |
| ii-1 | 10 | 8,88 | 7,78 | 10 | 8,88 | 7,78 |
| iii-1 | 25 | 22,23 | 19,44 | 25 | 22,23 | 19,44 |
| iv-1 | | | | | | |
| iv-2 | | | | | | |
| iv-3 | 10 | 20 | 30 | | | |
| iv-4 | | | | | | |
| iv-5 | | | | 10 | 20 | 30 |
| | | | | | | |
| Dicke des Iso Stabs (mm) | 3,93 | 3,93 | 3,92 | 3,93 | 3,93 | 3,93 |
| E-Modulus (MPa) | 1401 | 1701 | 2172 | 1368 | 1559 | 1893 |
| Charpy (kJ/m²) | 10,90 | 9,91 | 7,83 | 11,1 | 11,8 | 10,3 |

## Patentansprüche

1. Spritzgussartikel enthaltend:
i) 27 bis 87 Gew.-%, bezogen auf das Gesamtgewicht der Komponenten i bis iv, eines eines Polyesters aufgebaut aus aliphatischen Dicarbonsäuren und aliphatischen Diolen;
ii) 3 bis 15 Gew.- %, bezogen auf das Gesamtgewicht der Komponenten i bis iv, eines aliphatisch-aromatischen Polyesters enthaltend:
ii-a) 30 bis 70 mol %, bezogen auf die Komponenten ii-a bis ii-b, einer C₆-C₁₈-Dicarbonsäure;
ii-b) 30 bis 70 mol %, bezogen auf die Komponenten ii-a bis ii-b, Terephthalsäure;
ii-c) 99 bis 100 mol %, bezogen auf die Komponenten ii-a bis ii-b, 1,3 Propandiol oder 1,4-Butandiol;
ii-d) 0 bis 1 Gew.- %, bezogen auf die Komponenten ii-a bis ii-c eines Kettenverlängerers und/oder Verzweigers;
iii) 0 bis 35 Gew.-%, bezogen auf das Gesamtgewicht der Komponenten i bis iv, Polymilchsäure;
iv) 10 bis 35 Gew.-%, bezogen auf das Gesamtgewicht der Komponenten i bis iv, mindestens eines oberflächenmodifizierten Kaolins.

2. Spritzgussartikel nach Anspruch 1, **dadurch gekennzeichnet, dass** Polyester i ein biologisch abbaubarer aliphatischer Polyester ist, enthaltend:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren;
i-c) 99 bis 100 mol %, bezogen auf die Komponenten i-a bis i-b, 1,3 Propandiol oder 1,4-Butandiol;
i-d) 0 bis 1 Gew.- %, bezogen auf die Komponenten i-a bis i-c eines Kettenverlängerers und/oder Verzweigers.

3. Spritzgussartikel nach einem der Ansprüche 1 oder 2, wobei das oberflächenmodifizierte Kaolin ein Aspektverhältnis von 1 bis 15 aufweist.

4. Spritzgussartikel nach einem der Ansprüche 1 bis 3, wobei das Kaolin eine Methacrylsilan- oder Vinylsilan-modifizierte Oberfläche aufweist.

5. Spritzgussartikel nach Anspruch 2, enthaltend 10 bis 30 Gew.-%, bezogen auf das Gesamtgewicht der Komponenten i bis iv, Polymilchsäure.

6. Spritzgussartikel nach Anspruch 1, enthaltend 0 Gew.-%, bezogen auf das Gesamtgewicht der Komponenten i bis iv, Polymilchsäure.

7. Spritzgussartikel nach Anspruch 1 bis 6, enthaltend 0,5 bis 10 Gew.-%, bezogen auf das Gesamtgewicht der Komponenten i bis iv, eines thermoplastischen Polyurethans.

8. Spritzgussartikel nach einem der Ansprüche 1 bis 7 mit einer Kerbschlagzähigkeit gemäß DIN EN 179-1/1eU:2000 von größer 8 kJ/m².

9. Spritzgussartikel nach einem der Ansprüche 1 bis 8 mit einem E-Modul gemäß ISO 527-3:2003 von größer 1500 MPa.

## Claims

1. An injection molded article comprising:
i) 27% to 87% by weight based on the total weight of the components i to iv of a polyester constructed from aliphatic dicarboxylic acids and aliphatic diols;
ii) 3% to 15% by weight based on the total weight of the components i to iv of an aliphatic-aromatic polyester comprising:
ii-a) 30 to 70 mol% based on the components ii-a to ii-b of a C₆-C1₈-dicarboxylic acid;
ii-b) 30 to 70 mol% based on the components ii-a to ii-b of terephthalic acid;
ii-c) 99 to 100 mol% based on the components ii-a to ii-b of 1,3-propanediol or 1,4-butanediol;
ii-d) 0% to 1% by weight based on the components ii-a to ii-c of a chain extender and/or branching agent;
iii) 0% to 35% by weight based on the total weight of the components i to iv of polylactic acid;
iv) 10% to 35% by weight based on the total weight of the components i to iv of at least one surface-modified kaolin.

2. The injection molded article according to claim 1, wherein polyester i is a biodegradable aliphatic polyester comprising:
i-a) 90 to 100 mol% based on components i-a to i-b of succinic acid;
i-b) 0 to 10 mol% based on components i-a to i-b of one or more C₆-C₂₀ dicarboxylic acids;
i-c) 99 to 100 mol% based on the components i-a to i-b of 1,3-propanediol or 1,4-butanediol;
i-d) 0% to 1% by weight based on the components i-a to i-c of a chain extender and/or branching agent.

3. The injection molded article according to either of claims 1 and 2, wherein the surface-modified kaolin has an aspect ratio of 1 to 15.

4. The injection molded article according to any of claims 1 to 3, wherein the kaolin has a methacryloylsilane- or vinylsilane-modified surface.

5. The injection molded article according to claim 2, comprising 10% to 30% by weight based on the total weight of the components i to iv of polylactic acid.

6. The injection molded article according to claim 1, comprising 0% by weight based on the total weight of the components i to iv of polylactic acid.

7. The injection molded article according to any of claims 1 to 6, comprising 0.5% to 10% by weight based on the total weight of the components i to iv of a thermoplastic polyurethane.

8. The injection molded article according to any of claims 1 to 7 having a notched impact strength according to DIN EN 179-1/leU:2000 of greater than 8 kJ/m².

9. The injection molded article according to any of claims 1 to 8 having an elastic modulus according to ISO 527-3:2003 of greater than 1500 MPa.

## Revendications

1. Article moulé par injection, contenant :
i) 27 à 87 % en poids, par rapport au poids total des composants i à iv, d'un polyester synthétisé à partir d'acides dicarboxyliques aliphatiques et de diols aliphatiques ;
ii) 3 à 15 % en poids, par rapport au poids total des composants i à iv, d'un polyester aliphatique-aromatique contenant :
ii-a) 30 à 70 % en moles, par rapport aux composants ii-a à ii-b, d'un acide dicarboxylique en C₆-C₁₈ ;
ii-b) 30 à 70 % en moles, par rapport aux composants ii-a à ii-b, d'acide téréphtalique ;
ii-c) 99 à 100 % en moles, par rapport aux composants ii-a à ii-b, de 1,3-propanediol ou 1,4-butanediol ;
ii-d) 0 à 1 % en poids, par rapport aux composants ii-a à ii-c, d'un extenseur de chaîne et/ou d'un ramificateur ;
iii) 0 à 35 % en poids, par rapport au poids total des composants i à iv, de poly(acide lactique) ;
iv) 10 à 35 % en poids, par rapport au poids total des composants i à iv, d'au moins un kaolin modifié en surface.

2. Article moulé par injection selon la revendication 1, **caractérisé en ce que** le polyester i est un polyester aliphatique biologiquement dégradable, contenant :
i-a) 90 à 100 % en moles, par rapport aux composants i-a à i-b, d'acide succinique ;
i-b) 0 à 10 % en moles, par rapport aux composants i-a à i-b, d'un ou de plusieurs acides dicarboxyliques en C₆-C₂₀ ;
i-c) 99 à 100 % en moles, par rapport aux composants i-a à i-b, de 1,3-propanediol ou 1,4-butanediol ;
i-d) 0 à 1 % en poids, par rapport aux composants i-a à i-c, d'un extenseur de chaîne et/ou d'un ramificateur.

3. Article moulé par injection selon l'une quelconque des revendications 1 et 2, dans lequel le kaolin modifié en surface présente un rapport longueur/diamètre de 1 à 15.

4. Article moulé par injection selon l'une quelconque des revendications 1 à 3, dans lequel le kaolin présente une surface modifiée avec du méthacrylsilane ou du vinylsilane.

5. Article moulé par injection selon la revendication 2, contenant 10 à 30 % en poids, par rapport au poids total des composants i à iv, de poly(acide lactique).

6. Article moulé par injection selon la revendication 1, contenant 0 % en poids, par rapport au poids total des composants i à iv, de poly(acide lactique).

7. Article moulé par injection selon l'une quelconque des revendications 1 à 6, contenant 0,5 à 10 % en poids, par rapport au poids total des composants i à iv, d'un polyuréthane thermoplastique.

8. Article moulé par injection selon l'une quelconque des revendications 1 à 7, ayant une résistance au choc avec entaille selon DIN EN 179-1/1eU:2000 de plus de 8 kJ/m².

9. Article moulé par injection selon l'une quelconque des revendications 1 à 8, ayant un modulé d'élasticité selon ISO 527-3:2003 de plus de 1 500 MPa.
